# DEMANDE DE BREVET EUROPEEN

(11) **EP 0 654 430 A2**
(43) Date de publication de la demande: **24.05.1995**
(21) Numéro de dépôt: 94402348.0
(22) Date de dépôt: 19.10.1994
(51) Int. Cl.: A47J 31/40, B65D 88/68, B65G 65/46, B65G 65/00

(54) **Distributeur de matière pulvérulente telle que par example de la mouture de café**

(30) Priorité: 04.11.1993 FR 9313140
(71) Demandeur: MOULINEX S.A., F-93170 Bagnolet (FR)
(72) Inventeur: Clech, Jean-René, F-61000 Alencon (FR); Landais, Francis Pierre J., F-72600 Mamers (FR)
(74) Mandataire: Busquets, Jean-Pierre

(57) **Abrégé**

Ce distributeur comporte un réservoir (2) de matière pulvérulente dont le fond débouche dans une chambre (7) s'ouvrant sur un tube (12) qui entoure, sur toute sa longueur, un organe hélicoïdal transporteur (16) relié à des moyens (17) d'entraînement en rotation et propre, en tournant, à entraîner la matière pulvérulente s'écoulant du réservoir vers un orifice d'évacuation (14) pratiqué en aval du tube.

Selon l'invention, au moins un organe rotatif de brassage (19) est agencé dans le fond du réservoir (2) en étant couplé mécaniquement à l'organe hélicoïdal transporteur (16) par un dispositif rotatif de couplage (20) adapté à être directement entraîné en rotation par ledit organe hélicoïdal transporteur (16).

L'invention s'applique notamment aux distributeurs automatiques de mouture pour machines à café automatiques.

## Description

La présente invention concerne un distributeur de matière pulvérulente telle que par exemple de la mouture de café, comportant un réservoir contenant une quantité de matière pulvérulente et comprenant une paroi latérale et un fond débouchant dans une chambre s'ouvrant sur un tube qui entoure, sensiblement sur toute sa longueur, au moins un organe hélicoïdal transporteur relié en une extrémité à des moyens d'entraînement en rotation et propre, en tournant, à entraîner la matière pulvérulente s'écoulant du réservoir vers un orifice d'évacuation pratiqué en aval du tube.

Dans des distributeurs connus de ce genre, utilisés notamment mais non exclusivement dans des machines à café automatiques, il s'avère que la matière pulvérulente contenue dans le réservoir a souvent tendance à se coller aux parois de celui-ci et à créer ainsi dans le fond du réservoir une voûte qui empêche l'écoulement de la matière hors du réservoir, ce qui en fait un distributeur peu fiable.

L'invention se propose, par suite, de réaliser un distributeur de matière pulvérulente dans lequel l'écoulement de la matière pulvérulente hors du réservoir soit constamment assuré, et ce d'une manière simple et efficace.

Selon l'invention, ce résultat est atteint grâce au fait que le distributeur de matière pulvérulente, du type exposé ci-dessus, comporte en outre au moins un organe rotatif de brassage de la matière pulvérulente contenue dans le réservoir, qui est agencé dans un organe de support fixé dans le fond du réservoir et qui est couplé mécaniquement à l'organe hélicoïdal transporteur par un dispositif rotatif de couplage adapté à être directement entraîné en rotation par ledit organe hélicoïdal transporteur.

Ainsi, on comprend qu'outre le fait que l'organe de brassage joue le rôle de briseur de voûte et facilite la descente de la matière pulvérulente contenue dans le réservoir, l'organe hélicoïdal remplit à la fois la fonction de transport de la matière pulvérulente s'écoulant du réservoir et celle d'entraînement en rotation de l'organe de brassage par l'intermédiaire du dispositif de couplage approprié ; ces deux fonctions de l'organe hélicoïdal permettent donc avantageusement de simplifier la réalisation du distributeur, d'où un coût de fabrication réduit de ce dernier.

D'autres caractéristiques et avantages de l'invention ressortiront d'ailleurs de la description qui va suivre, à titre d'exemple non limitatif, en référence aux dessins annexés dans lesquels :
- la figure 1 est une vue en coupe verticale d'un distributeur de matière pulvérulente telle que de la mouture de café selon l'invention ;
- la figure 2 est une vue en coupe selon la ligne II-II de la figure 1 ; et
- la figure 3 est une vue de dessous d'un dispositif de couplage illustré figures 1 et 2.

Dans ce qui suit, on décrira le distributeur de matière pulvérulente conforme à l'invention dans le cadre d'une distribution automatique de mouture de café, étant entendu qu'un tel distributeur peut également être utilisé pour distribuer tout autre type de matière pulvérulente, par exemple de la farine, sans sortir pour cela du cadre de l'invention.

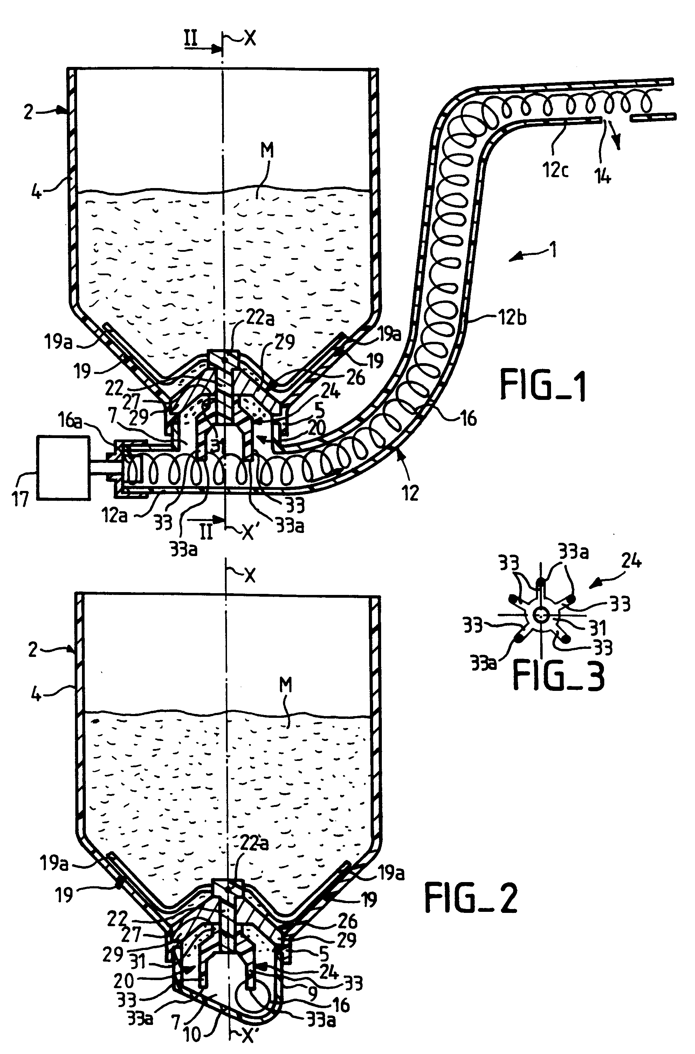

Dans l'exemple de réalisation illustré à la figure 1, le distributeur de mouture 1 comporte un réservoir 2, en l'occurrence en forme générale d'entonnoir d'axe vertical central XX', contenant une quantité de mouture de café M et présentant une paroi latérale 4 de forme cylindrique à base conique et un fond cylindrique 5 sur lequel est fixé de manière amovible, par exemple par simple emmanchement à force, un réceptacle 7 (mieux visible à la figure 2) délimité par une petite paroi latérale 9 et un fond incliné 10, et formé d'un seul tenant avec un tube rigide 12 de manière à constituer une chambre débouchant, d'une part, verticalement dans le fond 5 du réservoir 2 et, d'autre part, latéralement dans le fond du tube 12 proprement dit.

Dans cet exemple, le tube 12 (figure 1) comporte un premier tronçon horizontal dit amont 12a dans lequel est réalisé le réceptacle formant chambre 7, un deuxième tronçon ascendant 12b et un troisième tronçon horizontal dit aval 12c dans lequel est formé un orifice d'évacuation 14 relié à un filtre non représenté.

Le tube 12, figure 1, entoure sur toute sa longueur un enroulement métallique hélicoïdal du type filaire 16 qui peut être assimilé à un ressort et qui est relié en une extrémité 16a à un groupe moto-réducteur 17 adapté à entraîner en rotation, à vitesse régulée, l'enroulement filaire 16 dans un sens convenable tel que celui-ci assure le transport de la mouture de café M s'écoulant du réservoir 2 vers l'orifice d'évacuation 14.

Il convient de souligner ici que l'enroulement hélicoïdal filaire 16 pourrait être remplacé par une vis d'Archimède classique, sans sortir du cadre de l'invention.

Par ailleurs, le dosage volumétrique de la mouture de café M transportée par l'enroulement filaire 16 peut avantageusement être réglé par le groupe moto-réducteur 17 en faisant tourner ce dernier pendant un temps donné, par exemple à l'aide d'une minuterie programmée.

Selon l'invention, il est prévu dans le fond du réservoir 2 au moins un organe rotatif de brassage 19 de la mouture de café M contenue dans le réservoir, qui est couplé mécaniquement à l'enroulement hélicoïdal filaire 16 par un dispositif rotatif de couplage, désigné par la référence générale 20 sur les figures 1 et 2, adapté à être directement entraîné en rotation par l'enroulement filaire 16.

Dans l'exemple de réalisation illustré figures 1 et 2, le dispositif de couplage 20 comporte une tige cylindrique 22 disposée sur l'axe XX' du réservoir 2 et pourvue d'une tête 22a dans laquelle sont ancrés quatre organes de brassage 19 constitués ici par quatre pales agencées par paire symétriquement par rapport à l'axe XX', et une pièce d'accouplement 24 présentant une forme générale de "crabe" et montée coaxialement et fixement autour de la tige 22 ; l'ensemble tige 22 - pièce d'accouplement 24 est maintenu en place au moyen d'une entretoise formant support 26 constituée par un fût tubulaire cylindrique 27 interposé coaxialement entre la tête de la tige 22 et la pièce d'accouplement 24 en laissant subsister un certain jeu annulaire, et pourvu d'ailettes 29, par exemple au nombre de trois, ancrées dans le fond 5 du réservoir 2 par tout moyen de fixation approprié.

La pièce d'accouplement 24, figures 1 et 2, comprend un corps cylindrique creux 31 prolongé vers le bas par une pluralité de pattes verticales 33, par exemple au nombre de cinq, réparties régulièrement suivant un cercle autour du corps 31, comme on le voit sur la figure 3, et débouchant dans la chambre 7 du tube 12 de telle sorte que leurs parties terminales respectives 33a soient successivement en prise, à la manière d'un engrenage, avec les spires de l'enroulement filaire 16 lors de la rotation de ce dernier. A cet effet, l'enroulement filaire 16 est disposé sur la trajectoire circulaire décrite par les pattes 33 en étant désaxé par rapport à l'axe XX' du réservoir 2 ; autrement dit, l'enroulement filaire 16 est placé sur une corde de la trajectoire circulaire des pattes 33 de la pièce d'accouplement 24, ladite corde pouvant par exemple être confondue avec la tangente à la trajectoire circulaire des pattes 33.

Comme le montrent les figures 1 et 2, chaque pale 19 présente une forme coudée et comporte un tronçon antérieur 19a s'étendant parallèlement et à légère distance de la portion conique de la paroi latérale 4 du réservoir 2.

Le fonctionnement du distributeur de mouture de café 1 conforme à l'invention est le suivant.

L'enroulement hélicoïdal filaire 16 entraîné en rotation par le groupe moteur 17 entraîne lui-même en rotation le dispositif de couplage 20 par "engrenages" successifs des pattes 33 de la pièce d'accouplement 24 avec les spires de l'enroulement 16, ainsi que les quatre pales 19 solidaires du dispositif de couplage 20. Les quatre pales 19 brassent la mouture de café M contenue dans le réservoir 2 et facilitent sa descente régulière dans le tube 12 via la chambre 7 dont le fond incliné 10 favorise encore cette descente de la mouture M. L'enroulement hélicoïdal filaire 16 transporte alors la mouture de café M issue du réservoir 2 jusqu'à l'orifice d'évacuation 14 par lequel elle tombe par gravité.

On a donc réalisé suivant l'invention un distributeur de matière pulvérulente, notamment de café moulu, qui est particulièrement avantageux tant du point de vue coût de fabrication que du point de vue de l'obtention aisée du transfert total et régulier de la matière pulvérulente sans risque de voûtage à l'intérieur du réservoir.

## Revendications

1. Distributeur de matière pulvérulente telle que par exemple de la mouture de café, comportant un réservoir (2) contenant une quantité de matière pulvérulente (M) et comprenant une paroi latérale (4) et un fond (5) débouchant dans une chambre (7) s'ouvrant sur un tube (12) qui entoure, sensiblement sur toute sa longueur, au moins un organe hélicoïdal transporteur (16) relié en une extrémité à des moyens (17) d'entraînement en rotation et propre, en tournant, à entraîner la matière pulvérulente s'écoulant du réservoir vers un orifice d'évacuation (14) pratiqué en aval du tube (12), **caractérisé en ce qu'**il comporte en outre au moins un organe rotatif (19) de brassage de la matière pulvérulente (M) contenue dans le réservoir (2), qui est agencé dans un organe de support (26) fixé dans le fond du réservoir (2) et qui est couplé mécaniquement à l'organe hélicoïdal transporteur (16) par un dispositif rotatif de couplage (20) adapté à être directement entraîné en rotation par ledit organe hélicoïdal transporteur (16).

2. Distributeur de matière pulvérulente selon la revendication 1,
**caractérisé en ce que** le dispositif de couplage (20) comporte une tige cylindrique (22) montée en rotation dans l'organe de support (26) en s'étendant verticalement dans le débouché du réservoir et présentant une tête d'ancrage (22a) de l'organe de brassage (19), ainsi qu'une pièce d'accouplement (24) comprenant un corps cylindrique creux (31) monté coaxialement et solidairement autour de la tige (22), et prolongé vers le bas par des pattes verticales (33) qui sont réparties régulièrement autour dudit corps (31) en s'étendant dans la chambre (7) du tube (12) et dont les parties terminales respectives (33a) sont successivement en prise avec l'hélice de l'organe transporteur (16) lors de la rotation de ce dernier, ledit organe hélicoïdal transporteur (16) étant placé à cet effet sur une corde de la trajectoire circulaire décrite par les pattes (33) de la pièce d'accouplement (24).

3. Distributeur de matière pulvérulente selon la revendication 2,
**caractérisé en ce que** le réservoir (2) présentant une forme générale d'entonnoir, l'ensemble tige (22) - pièce d'accouplement (24) est axé sur l'axe (XX') du réservoir, et l'organe de support (26) comprend un fût tubulaire cylindrique (27) interposé coaxialement entre la tête (22a) de la tige (22) et le corps (31) de la pièce d'accouplement (24) en laissant subsister un jeu annulaire, et pourvu d'ailettes (29) dont les extrémités antérieures respectives sont ancrées dans la partie inférieure (5) du réservoir (2).

4. Distributeur de matière pulvérulente selon la revendication 3,
**caractérisé en ce que** la chambre (7) du tube (12) est conformée en un réceptacle dont une partie s'étend latéralement au tube et qui est délimité par un fond (10) et une petite paroi latérale (9) fixée de manière amovible par emmanchement à force dans la partie inférieure (5) du réservoir (2).

5. Distributeur de matière pulvérulente selon la revendication 4,
**caractérisé en ce que** le fond (10) du réceptacle (7) est incliné en direction de l'organe hélicoïdal transporteur (16) de manière à faciliter l'écoulement de la matière pulvérulente issue du réservoir.

6. Distributeur de matière pulvérulente selon l'une quelconque des revendications précédentes,
**caractérisé en ce que** l'organe de brassage (19) est constitué par une pale présentant un tronçon antérieur (19a) s'étendant parallèlement et à légère distance de la paroi latérale (4) du réservoir (2).

7. Distributeur de matière pulvérulente selon l'une quelconque des revendications précédentes,
**caractérisé en ce que** l'organe hélicoïdal transporteur (16) est constitué par un enroulement filaire.
